# EUROPEAN PATENT APPLICATION

(11) **EP 4 403 334 A1**
(43) Date of publication of application: **24.07.2024**
(21) Application number: 23152633.6
(22) Date of filing: 20.01.2023
(51) Int. Cl.: B29C 48/92

(54) **A SYSTEM AND A METHOD FOR CONTROLLING AN EXTRUSION LINE OF MIXED PLASTICS**

(71) Applicant: Rolan Investment OÜ, 10117 Tallinn (EE)
(72) Inventor: Käsnar, Aivo, 51005 Tartu (EE); Saareväli, Aarne, 11912 Tallinn (EE); Valdmaa, Andrus, 61714 Ülenurme (EE)
(74) Representative: Moosedog Oy

(57) **Abstract**

The present disclosure relates to a system and a method for controlling an extrusion line of mixed plastics, wherein a temperature of one or more heaters (120) of the extrusion line is measured by one or more first sensors (110); a temperature and pressure of an extruder head (140) is measured by one or more pairs of second sensors (130); a coolant temperature of a set of dies (160) is measured by one or more third sensors (150); an amperage of an extruder motor (180) is measured by an ammeter (170); a pulling speed of a pulling unit (200) is measured by a tester (190); and wherein a computing device (210) configured to receive the measurement data from the one or more first sensors, from the one or more pairs of the second sensors, from the one or more third sensors, from the ammeter, from the tester.

## Description

### TECHNICAL FIELD

The present disclosure relates generally to extrusion lines of plastics, more specifically to a system and method for controlling an extrusion line.

### BACKGROUND

The known extrusion lines are controlled by operators. The tasks of extrusion line operator when handling the extrusion line are typically to check the technical condition of the extrusion line, make sure the material mixture is stable, to start and monitor the extrusion line and keep the line extrusion stable. The operator is thus also responsible for controlling the quality of the profile. To ensure the profile quality, one of the most important criterion is to keep the form of the extruded material profile within the permissible tolerance. However, this can be checked only after the profile has left the cooling bath when the profile has cooled completely.

During the operation of the extrusion line, the operator is not able to find the connections that would allow to relate the change in the form of the profile to the measured parameters of the extrusion process. The problem is that if the form of the profile goes beyond the permissible limits, then the reason for this occurred 1-1.5 hours ago, i.e. the difference between the consequence and the cause is very long.

In the factory an operator typically operates at least 2-3 extrusion lines. The more extrusion lines in the factory, the more operators are needed. If the operator is currently dealing with the problem of one line, then the other lines are not monitored at the same time. Thus every extrusion line in the factory would need at least one operator, which makes extrusion processes more expensive. Therefore, there is a need to reduce the number of operators in the factory, but reducing the number of operators causes other problems described herein.

If something affects the extrusion process and thus the profile forming process, the operator is thus not able to react immediately and this causes deviations from the predetermined dimensions thus reduces profile quality. The problems arising during the extrusion process may be caused by several reasons. Uneven fraction of the material to be processed causes the change of the pressure, the material in the feeding zone of the extruder moves unevenly or the speed of movement of the material changes, heating temperatures of the heaters may change. As mixed plastic contains different types of polymers and the fraction of the mixed plastic is of uneven size, this causes gas and thus pressure changes in the extrusion line. Due to the uneven fraction size and pressure changes, the mixed plastic to be extruded moves in the extruder feeding zone at a non-uniform speed.

Operator may make mistakes, get tired or lose focus or may not be able to carry out the profile quality control correctly. If the operator does not manage to react, makes a mistake, does not notice or is busy with other duties, has lost focus, gets tired, then the pressures of the extrusion line get too high and the extrusion line breaks down. This may cause several tens of meters of scrap profile or repairing may take hours which causes too long production downtime.

A large flow of air entering to the factory building or the hangar may affect the temperature curves of the extruder heaters because the heaters are typically configured to adjust its temperatures according to the outer temperature, i.e., if the outer temperature changes the heater adjust its temperature accordingly. Thus, if flow of air entering to the factory building lowers the room temperature of the factory building the heaters thus adjust its temperature incorrectly.

Therefore, in light of the foregoing discussion, there exists a need to overcome the aforementioned drawbacks associated with the stability of the extrusion lines.

### SUMMARY

The aim of the present disclosure is to provide a system and a method to keep the extrusion line stable. The aim of the disclosure is achieved by a system and method for controlling an extrusion line of mixed plastics as defined in the appended independent claims to which reference is made to. Advantageous features are set out in the appended dependent claims.

The present system and method also ensure uniform heating, and ensures a speed of movement of the mixed plastics being extruded so that the profile retains its shape. Additional advantages of the present disclosure are thus that it enables to reduce factory labor, increase production efficiency, ensure profile quality and reduce the amount of defective profiles.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

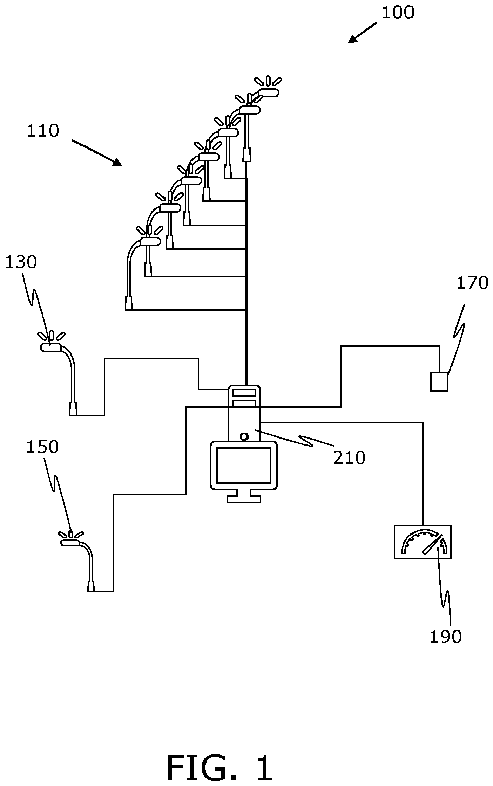

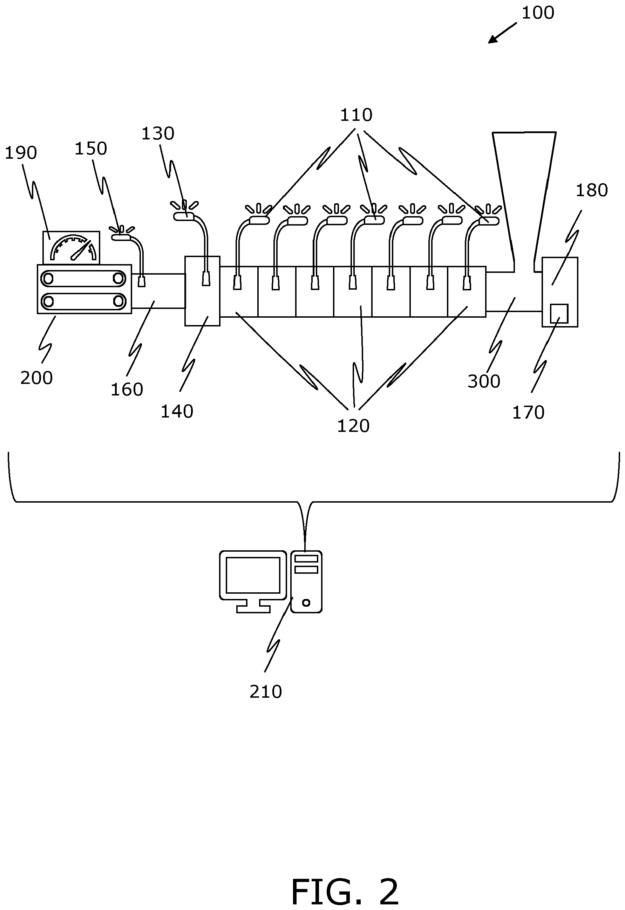

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Figure FIG. 1 shows an embodiment a system for controlling an extrusion line of mixed plastics according to the present disclosure;
Figure FIG. 2 shows a schematic illustration of an embodiment of the system shown in figure FIG. 1 according to the present disclosure.

### DETAILED DESCRIPTION OF EMBODIMENTS

The following detailed description illustrates embodiments of the present disclosure and ways in which they can be implemented.

In an aspect, an embodiment of the present disclosure a system for controlling an extrusion line of mixed plastics comprises one or more first sensors for measuring a temperature of one or more heaters of the extrusion line; one or more pairs of second sensors for measuring temperature and pressure of an extruder head; one or more third sensors for measuring a coolant temperature of a set of dies; an ammeter for measuring an amperage of an extruder motor; a tester configured to measure a pulling force of a pulling unit; a computing device configured to receive measurement data from the one or more first sensors, from the one or more pairs of the second sensors, from the one or more third sensors, from the ammeter, from the tester.

The one or more first sensors for measuring a temperature of one or more heaters of the extrusion line enable to control the melting of the mixture of mixed plastics material to be extruded. If temperature changes, the melting the mixture of mixed plastics changes which affects the pressure and moving speed of the mixed plastics. If the moving speed and pressure of the mixed plastics changes then the speed of the pulling unit needs to be adjusted by the computing device accordingly.

In the embodiments of the present disclosure a pair of the one or more pairs of second sensors for measuring temperature and pressure of an extruder head comprises a first temperature and pressure sensor arranged to measure a temperature and a pressure directly after an end of an extruder shaft; and a second temperature and pressure sensor arranged to measure a temperature and a pressure at the end of the extruder head. According to the embodiments, the second temperature and pressure sensor of the one or more pairs of the second sensors is configured to measure the pressure of the entire extrusion line. The second temperature and pressure sensor is configured to measure the pressure of the entire extrusion line to control the pulling speed of the pulling unit. If the pressure begins to equal the first temperature and pressure sensor, then the pulling speed of the pulling unit is too slow and it is necessary to increase the pulling speed.

The one or more third sensors for measuring the coolant temperature of a set of die enable continuously to monitor the temperature of the profile in the set of die. The one or more sensors for measuring the coolant temperature of the dies enable to see the temperature of the cooled profile on an ongoing basis throughout the time spent in the dies.

The one or more first sensors, the one or more pairs of second sensors, the one or more third sensors, the ammeter for measuring the amperage of the extruder motor, the tester configured to measure the pulling speed of the pulling unit are adapted to communicate with the computing device over Ethernet. The amperage of the extruder motor measured by the ammeter, the pressure of the extruder head measured by the one or more pairs of the second sensor, pulling force of the pulling unit measured by the tester are main parameters that affect the extrusion process.

Typically, the relationship between the parameters is as follows. If the amperage rises or falls, it is followed by a delay in the increase or decrease in pressure of the extruder head, and then in turn the increase or decrease in pulling speed of the of the pulling unit. I.e., the change in amperage of the extruder motor is the first warning that something is changing in the extrusion process. Thus the pressure of the extruder head and pulling force of the pulling unit need to be monitored.

When the pulling force parameter starts to show a growth trend or decrease trend and starts exiting a predefined allowable range then the computing device is configured to increase or decrease the moving speed of the mixed plastics being extruded by changing the speed of the pulling unit. The extent of the need for a change in speed depends largely on the nature of the trend of the pulling force parameter (if the pressures are higher and the flow is higher (400mm/min) then the pulling unit speed must be increased (measurements are made e.g. 5 times per minute)). Is it a relatively rapid rise and it is necessary to start "saving" the line, that is, the change in speed will be more aggressive on the part of the system, or rather a little corrective. At the same time, if after a change in speed over a period of time, the reverse change trend of the pulling force parameter begins to occur again, then again, the system intervenes and performs actions as needed and in the necessary direction. This enables to keep the production line stable. All three parameters are under surveillance, but the action still follows after the pulling force reading analysis.

Amperes of the extruder indicates the strength of the electric current of the extruder. If, e.g., the properties of the material change or for some reason the supply of material to the extruder shaft has increased or decreased, then this emerges in a change of the amperage reading. I.e., it shows is it more difficult or easier for the extruder to work.

The pressure of the extruder head indicates the pressure of the melt mass of mixed plastic before entering the die, that is, how much the molten mass is compressed on the extruder head. This enables conclude the pressure with which the extruder pushes the molten material into the dies.

At least two pressure sensors in the extruder head, i.e., a first pressure sensor at the molten mass inlet in the extruder head, a second pressure sensor at the molten mass outlet in the extruder head.

The extruder shaft creates pressure in the extruder head, the higher the pressure, the larger amount and the harder the molten mass is pressed into the die. As the pressure increases this may result in that the molten mass does not move on in the die and thus may get stuck in the die.

This can be determined by the two pressure sensors. More specifically, if the pressure determined by the first pressure sensor increases but the pressure determined by the second pressure sensor does not increase then this shows that a lump or conglomeration of the molten mass starts forming in the extruder head and this causes the change in the shape of the profile. E.g., first measured pressure parameter may be 4-5 and the second measured pressure parameter may be 2.5-3.5. The profile retains its shape only if the measured first pressure and the measured second pressure are in the same range.

The pressure parameters depend on the change in the supply speed of the plastic material and on the fluctuations in the ranges of accepted parameters of the material. The change in the supply of the material or the fluctuations in the ranges of the parameters of the material leads to a change in pressure.

If the pressure drops then the amount of material reduces and the profile will lose its form, however, if the pressure becomes too high then the process may be interrupted. Typically it takes 2-4h to restart the whole extrusion line, which causes loss in production. Thus the present system and method help to keep the form of the extruded material profile within the permissible tolerance and avoid interruptions in the production. Thus, makes the extrusion process more stable.

The third important parameter, the pulling force is a derived parameter that characterizes the operation of the pulling unit. The pulling unit may be e.g., Haul-Off type of pulling mechanism. Pulling speed of the pulling unit is a bit slower than the moving of the material in the extrusion line to create backpressure. The speed of the extrusion line, i.e., the speed of production (meters per minute), is directly related to the cooling efficiency of the profile.

On the extruded and solidified plastic material, i.e., the plastic profile, friction occurs with the inner surfaces of the die. The pressure given by the extruder is not enough to move the already solidified profile. The pulling unit is adapted to help to move the material inside the dies. The pulling speed of the pulling unit is thus according to the present system and method adapted with the speed of movement of the material so that the profile retains its shape (the deficiency creates a crack, the excess increases the pressure). This enables to avoid that the material gets stuck in the dies and that the pulling unit stretch the profile out of the form. This balance is then maintained by a derived parameter of pulling force.

All three measured parameters are logged on the server and optionally may be backed up on the data storage. The system and method enable to view graphs and relationships of the measured parameters on the screen of the computing device and make conclusions. For example, the composition of mixture is known, then based on the measured parameters the computing device is configured to analyze the measured process parameters, to analyze the relationships with the environment conditions (e.g., temperature and humidity in the room, computer set according to the relationships, with mixture temperature at entry, fraction size of the mixture and to adjust the extrusion process parameters according to the needs.

According to the embodiments, the computing device is configured to determine, during the extrusion process, deviations from the predetermined dimensions of a form of a profile and accordingly to adjust at least one of the amperage of the extruder motor, the pressure of the extruder head and the pulling speed of the pulling unit.

The system for controlling the extrusion line of mixed plastics is configured to notify by the computing device the operator immediately if deviations from the predetermined dimensions or process parameter occur. The computing device configured to receive measurement data from the one or more first sensors, from the one or more pairs of the second sensors, from the one or more third sensors, from the ammeter, from the tester. The computing device comprises a screen configured to display the measurement data and process parameters. The computing device may further be connected to a server to allow to view, monitor and control the extrusion process over the Internet. Thus, the system enables to display on the screen the measured results, the form of reference profile, tolerance limits and at the same time shows deviations from the tolerance limits which then trigger an alarm or notification to which the operator can respond. By monitoring the shape of the profile, the system is configured to notify the operator immediately if there are deviations from the given dimensions.

The computing device is further configured to monitor at least one of a first trend of a values of the pulling speed of the pulling unit and a second trend of a values of the pressure of the extruder head and accordingly to adjust at least of the amperage of the extruder motor, the pressure of the extruder head and the pulling speed of the pulling unit. Throughout the present disclosure, the term "trend" as used herein refers to measured values compared to the predetermined value. The computing device may be set to work on two parameters, the pressure of the extruder head and pulling force of the pulling unit and make the measurement e.g., at 5 times per second. The predetermined pressure of the extruder head to be monitored may be e.g., 3 bar - 5 bar. If the pressure of the extruder head starts showing change in the trend the computing device is configured to fix the trend of pressure change.

The trend is determined by the tolerance minimum value and maximum value (i.e., the predetermined permissible range), by the last measured stable reading and by the middle value between minimum value and maximum value of the tolerance.

I.e., if the predetermined tolerance of the pressure of the extruder head is 3 bar - 5 bar then the middle value of this minimum value and maximum value of the tolerance is 4 bar. If the pressure starts raising from the last measured stable reading e.g., from 3 bar, then the computing device is configured to determine a growth trend when the pressure reaches to or exceeds 4 bar (i.e., to the middle value between minimum value and maximum value of the tolerance).

This means that too much material is coming from the extruder, and pulling unit is configured to get a command to turn itself faster, which means that the material will start pulling away from the front faster until the trend stops.

The system can be configured according to the content of the mixture of the mixed plastic. E.g., every 0.01 bar pressure increase in the extruder head over the middle value adds to the pulling speed of 0.02 meters per minute (m/min).

If the extrusion line has been stable for at least 5 minutes at 4 bar pressure then the middle value will remain at 4.5 bar. If the for example the predetermined permissible range permissible range is 2-4, the middle value between minimum value and maximum value of the tolerance is 3, if the measured value of the parameter reaches to 3 and stays constant between 3-4 during the predetermined time, then the middle value between minimum value and maximum value of the tolerance is 3.5, etc.

The same way is also the downtrend monitored, i.e. when pulling unit slows down and doesn't pull the material away so quickly as needed.

At the same time, if the pressure is within the predetermined permissible range, i.e. there is no trend, then the computing device also monitors the pulling force. In regards of the pulling force the predetermined permissible range may be e.g., 2-4, which reflects the work of the motor of the pulling unit when hauling the board. If the coefficient of friction increases, then the pulling unit is configured to pull harder, and thus the motor of the pulling unit do more work. The process works by analogy with pressure. The system can be configured e.g., so that a change in pulling force of 0.05 above middle value of the predetermined minimum value and maximum value adds to the pulling speed of 0.02 meters per minute (m/min).

Monitoring the pulling force is always preferred. That is, if both, the pulling force and the pressure are in the same trend, then the process of stabilization takes place on the basis of pulling force.

The operator is only able to track only specific rapid changes between values from 3 to 4, from 4 to 5, but is not able to track a trend, which indicates that something wrong is happening in the extrusion process. The present system and method is configured to react when the trend reaches close to the predetermined value, exceeds the predetermined value or when a rapid change occurs in the trend thus enables to stabilize the extrusion line without interruptions of the process.

Optionally the system further comprises at least one of: a 3D camera and a machine learning program configured to detect the form of the profile and its deviations, an application configured to manage the extrusion process from a distance, one or more heating units comprising a frequency converter.

Optionally, the system may comprise the 3D camera and a machine learning program configured to detect the form of the profile and its deviations. The problem is that if the form of the profile deviates from the permitted limits, the reason for it happened 1-1.5 hours ago, that is, the difference between the effect and the cause is very long. The 3D camera and machine learning program that can detect the shape of the material and its deviations helps thus to monitor the changes and correct the parameters of the extrusion process more efficiently.

Optionally, the system may comprise a web application or a smartphone application configured to manage the extrusion process from a distance to enable to view, monitor, and correct the parameters of the extrusion process from a distance.

Optionally, the system may further comprise one or more heating units comprising a frequency converter. The one ore more heating units enable to achieve more uniform heating. The one or more heating units may be one or more heating fans. The frequency converters enable to not to constantly turn the heating fans on and off, which leads to a frequent replacement of contactors of the heating fans and thus reduces the reliability of the system. With frequency converters, there is no need to constantly stop the heating fans, it is enough to change their revolutions.

Optionally, the system may further comprise one or more databases for storing the measured and logged data of extrusion processes.

In another aspect, an embodiment of the present disclosure provides a method for controlling extrusion line of mixed plastics comprises measuring parameters of an extrusion process; monitoring at least one of a first trend of values of a pulling speed of a pulling unit and a second trend of values of a pressure of an extruder head; comparing the monitored values of the first trend and the second trend with a predetermined lower limit values and a predetermined upper limit values; registering a change in the monitored first trend or in the monitored second trend; adjusting based on at least one monitored trend the one or more measured parameters.

The method may further comprise adjusting the pulling speed of the pulling unit according to the change in the trend of the second trend of values of a pressure of the extruder head.

According to the embodiments of the method according to the present disclosure, measuring the parameters comprises measuring a temperature of one or more heaters of the extrusion line; measuring a temperature and pressure of the extruder head directly after the end of an extruder shaft; measuring a temperature and pressure at the end of the extruder head; measuring a coolant temperature of a set of dies; measuring an amperage of an extruder motor; measuring the pulling speed of the pulling unit.

Optionally, the method may further comprise analyzing the measured parameters one or more times per second.

In a third aspect, an embodiment of the present disclosure provides a computer program for controlling extrusion line of mixed plastics comprising instructions which when the computer program is executed by a system comprising a computing device, cause the system to perform the method according to the embodiments of the present disclosure. The computer program is adapted to monitor and analyze sensor information of the extrusion line, determine the deviations of the profile and provide commands to the extruder motor, heaters and pulling unit of the extrusion line to adapt the process parameters such as amperage of the extruder motor, pressure of the extruder head, pulling force of the pulling unit. The program may be located in a computing device or on a server and enables to view the extrusion process and measured parameters of the extrusion process on the screen of the computing device or over the Internet via the web application or the smartphone application.

The system and method enable to keep the work of the extrusion line stable and thus to reduce the amount of scrap. The advantage of the present system and method is that it enables to increase productivity by at least 10-15% because the amount of scrap profile decreases.

This achieved by predetermining the pressure value of the extruder head and the value of pulling force of the pulling unit to be monitored and by monitoring the predetermined values by the computing device. When during the extrusion process a change in the predetermined values and monitored values is determined by the system, the system is configured to adjust the extrusion process parameters (i.e., amperage of the extruder motor, pressure of the extruder head, pulling speed of the pulling unit) accordingly to keep the work of extrusion line stabile.

The pressure value and the value of pulling speed to be monitored by the system are predetermined according to the material mixture processed by the extrusion line.

The most important parameter is the pulling force which must always be within a certain range. Since the parameter is a number obtained as a result of experiments, then it does not have a unit.

### EXAMPLE

The system and method according to the present disclosure may be adapted to work on the extrusion line comprising 1-12 heaters. The one or more first temperature sensors are arranged to measure the temperatures of the one or more heaters of the extrusion line.

In an example the system and method of the present disclosure may be adapted to work on the extrusion line comprising five heaters. The numbers of dies and lengths of the dies may vary. In this example the system comprises five first sensors for measuring a temperature of five heaters of the extrusion line; a pair of second sensors for measuring temperature and pressure of an extruder head; six third sensors for measuring a coolant temperature of a set of dies comprising six dies; an ammeter for measuring an amperage of an extruder motor; a tester configured to measure a pulling speed of a pulling unit; a computing device configured to receive measurement data from the seven first sensors, from the pairs of second sensors, from the sensor, from the ammeter, from the tester.

In the example the five first sensors are configured to measure the temperatures of the five heaters of the extrusion line and forward the measured temperatures to the computing device, wherein the computing device based on the measured other process parameters is configured to keep the temperatures of the heaters in the predetermined ranges or to adjust the temperature of the heaters based on the other measured parameters.

Thus the predetermined temperature ranges of the heaters the first sensors are configured to measure may be for the stable extrusion process as follows: a temperature of a first heater at the mixed plastic entry to the extrusion line 158° C - 167° C; a temperature of a second heater 163° C - 172° C; a temperature of a third heater 168° C - 177° C; a temperature of a fourth heater 173° C - 182° C; a temperature of a fifth heater 163° C - 172° C.

In the example the pair of the second sensors is configured to measure the temperature and pressure of the extrusion head, wherein the pair of the second sensors comprises a first temperature and pressure sensor and a second temperature and pressure sensor, and further configured to forward the measured temperatures and pressures to the computing device, wherein the computing device based on the measured other process parameters is configured to keep the temperatures and pressures of the extrusion head in the predetermined ranges or to adjust the temperatures and pressures of the extrusion head based on the other measured parameters.

The first temperature and pressure sensor is arranged to measure a temperature and a pressure directly after an end of an extruder shaft, wherein the predetermined temperature after the end of the extruder shaft is e.g., 173° C - 177° C and the predetermined pressure after the end of the extruder shaft is less than 3 bar-6 bar. The second temperature and pressure sensor is arranged to measure a temperature and a pressure at the end of the extruder head, wherein the predetermined temperature at the end of the extruder head is 173° C - 177° C and the predetermined pressure at the end of the extruder head is 3 bar - 6 bar. Thereat the predetermined pressure at the end of the extruder head 3 bar - 6 bar has to be more than the pressure after the end of the extruder shaft.

In the example the one or more third sensors is configured to measure a coolant temperature of a set of dies, wherein the coolant is set to run through a chiller and through the dies and provide the minus degrees, and wherein the one or more third sensors is further configured to forward the measured coolant temperature to the computing device, wherein the computing device based on the measured other process parameters is configured to keep the coolant temperature of a set of dies in the predetermined ranges or to adjust the coolant temperature of a set of dies based on the other measured parameters.

In the example the one or more sensors comprise the number of sensors according to the number of dies in the set of dies. A typical set of dies may comprise six dies. Thus, a first sensor of the third sensors is arranged to measure the input coolant temperature at the first die, which may be -5° C to -8° C; a second sensor of the third sensors is arranged to measure the input coolant temperature at the second die, which may be -5° C to -8° C; a third sensor of the third sensors is arranged to measure the input coolant temperature at the third die, which may be +5° C to +10° C; a fourth sensor of the third sensors is arranged to measure the input coolant temperature at the fourth die, which may be + 5° C to +10° C; a fifth sensor of the third sensors is arranged to measure the input coolant temperature at the fifth die, which may be + 5° C to +10° C; a sixth sensor of the third sensors is arranged to measure the input coolant temperature at the sixth die, which may be +5° C to +10° C. Thereat the computing device is configured to control that the coolant temperatures would not get warmer.

The process parameters are adjustable by the computing device based on the components of the mixture of the mixed plastic to be extruded. The mixed plastic to be extruded comprises at least agglomerated mixed plastic containing household waste, packages, etc. Such mixed plastic may comprise 0%-15% of a polypropylene, 0%-15% density and/or low density polyethylene, 0%-10% polystyrene, 70%-100% agglomerated mixed plastic (e.g., household waste, packages, etc).

Material properties may change due to the fraction of the material mixture is not uniform. This is especially critical with mixed plastics. The supply of mixture of the mixed plastic to the extruder shaft depends on the size of the fraction. The smaller fraction is more densely packed in the extruder shaft. The fraction of the mixture of mixed plastic to be extruded may be e.g., 5-10 mm; if less than 5 mm then inflow of the mixed plastic in the extruder increases. If the size of the fraction of the material is uneven, then the supply of the material will begin to fluctuate. If the fraction of the mixture of the material becomes thinner, the fraction of the material becomes more densely packed and the amperage increases.

Thus the compositions of the mixed plastic may be as follows. Mixture of mixed plastic X may comprise 10% polypropylene (PP), 10% high density and/or low density polyethylene (HD/LD)PE, 10%C polystyrene (PS), 70% agglomerated mixed plastic. Mixture of mixed plastic Y may comprise 15% PP, 15% (HD/LD)PE, 0% PS, 70% agglomerated mixed plastic. Mixture of mixed plastic Z may comprise 10% PP, 10% (HD/LD)PE, 0% PS, 80% agglomerated mixed plastic. Mixture of mixed plastic W may comprise 0% PP, 0% (HD/LD)PE, 0% PS, 100% agglomerated mixed plastic. Mixture of mixed plastic Q may comprise 5% PP, 5% (HD/LD)PE, 5% PS, 85% agglomerated mixed plastic.

In another example the system and method of the present disclosure may be adapted to work on the extrusion line comprising seven heaters. In this example the system comprises seven first sensors for measuring a temperature of seven heaters of the extrusion line; one or more pairs of second sensors for measuring temperature and pressure of an extruder head; one or more third sensor for measuring a coolant temperature of a set of dies; an ammeter for measuring an amperage of an extruder motor; a tester configured to measure a pulling speed of a pulling unit; a computing device configured to receive measurement data from the seven first sensors, from the pairs of second sensors, from the sensor, from the ammeter, from the tester.

### DETAILED DESCRIPTION OF THE DRAWINGS

Referring to figure FIG. 1, there is shown a schematic illustration of an embodiment of a system **100** for controlling an extrusion line of mixed plastics. The system **100** comprises seven first sensors **110** for measuring a temperature of seven heaters of the extrusion line; a pair of second sensors **130** for measuring temperature and pressure of an extruder head; a third sensor **150** for measuring a coolant temperature of a set of dies; an ammeter **170** for measuring an amperage of an extruder motor; a tester **190** configured to measure a pulling speed of a pulling unit; a computing device **210** configured to receive measurement data from the seven first sensors **110,** from the pairs of second sensors **130,** from the sensor **150,** from the ammeter **170,** from the tester **190.** Referring to figure FIG. 2, there is shown a schematic illustration of an embodiment of the system **100** shown in figure FIG. 1 according to the present disclosure, wherein the system **100** is installed to the extrusion line. The seven first sensors **110** are connected each to the seven heaters **120** of the extrusion line. The pair of second sensors **130** is connected to the extruder head **140.** The third sensor **150** is connected to the set of dies **160.** The ammeter **170** is connected to an amperage the extruder motor **180.** The tester **190** connected to the pulling unit **200.** The computing device **210** configured to receive measurement data from the seven first sensors **110,** from the pairs of second sensors **130,** from the sensor **150,** from the ammeter **170,** from the tester **190.**

## Claims

1. A system (100) for controlling an extrusion line of mixed plastics comprises
- one or more first sensors (110) for measuring a temperature of one or more heaters (120) of the extrusion line;
- one or more pairs of second sensors (130) for measuring temperature and pressure of an extruder head (140);
- one or more third sensors (150) for measuring a coolant temperature of a set of dies (160);
- an ammeter (170) for measuring an amperage of an extruder motor (180);
- a tester (190) configured to measure a pulling speed of a pulling unit (200);
- a computing device (210) configured to receive measurement data from the one or more first sensors (110), from the one or more pairs of the second sensors (130), from the one or more third sensors (150), from the ammeter (170), from the tester (190).

2. The system according to claim 1, wherein the one or more pairs of the second sensors (130) comprises
- a first temperature and pressure sensor arranged to measure a temperature and a pressure directly after an end of an extruder shaft; and
- a second temperature and pressure sensor arranged to measure a temperature and a pressure at the end of the extruder head.

3. The system according to claim 1 or 2, wherein the second temperature and pressure sensor is configured to measure the pressure of the entire extrusion line.

4. The system according to any of the preceding claims, wherein the computing device (210) is configured to determine, during the extrusion process, deviations from the predetermined dimensions of a form of a profile and accordingly to adjust at least one of the amperage of the extruder motor (180), the pressure of the extruder head (140) and the pulling speed of the pulling unit (200).

5. The system according to any of the preceding claims, wherein the computing device (210) is further configured to monitor at least one of a first trend of a values of the pulling speed of the pulling unit (200) and a second trend of a values of the pressure of the extruder head (140) and accordingly to adjust at least of the amperage of the extruder motor (180), the pressure of the extruder head (140) and the pulling speed of the pulling unit (200).

6. The system according to any of the preceding claims, wherein the system further comprises at least one of:
- a 3D camera (400) and a machine learning program configured to detect the form of the profile and its deviations,
- an application configured to manage the extrusion process from a distance,
- one or more heating units comprising a frequency converter.

7. A method for controlling extrusion line of mixed plastics comprises
- measuring parameters of an extrusion process;
- monitoring at least one of a first trend of values of a pulling speed of a pulling unit (200) and a second trend of values of a pressure of an extruder head (140);
- comparing the monitored values of the first trend and the second trend with a predetermined lower limit values and a predetermined upper limit values;
- registering a change in the monitored first trend or in the monitored second trend;
- adjusting based on at least one monitored trend the one or more measured parameters.

8. The method according to claim 7, wherein the method further comprises adjusting the pulling speed of the pulling unit (200) according to the change in the trend of the second trend of values of a pressure of the extruder head (140).

9. The method according to claim 7 or 8, wherein measuring the parameters comprises
- measuring a temperature of one or more heaters of the extrusion line;
- measuring a temperature and pressure of the extruder head (140) directly after the end of an extruder shaft;
- measuring a temperature and pressure at the end of the extruder head (140);
- measuring a coolant temperature of a set of dies;
- measuring an amperage of an extruder motor (180);
- measuring the pulling speed of the pulling unit (200).

10. The method according to any of the preceding claims, wherein the method further comprises analyzing the measured parameters one or more times per second.

11. A computer program for controlling extrusion line of mixed plastics comprising instructions which when the computer program is executed by a system comprising a computing device, cause the system to perform the method of any of claims 7-10.
